# EUROPÄISCHE PATENTSCHRIFT

(11) **EP 2 442 972 B1**
(45) Veröffentlichungstag und Bekanntmachung des Hinweises auf die Patenterteilung: **19.12.2012**
(21) Anmeldenummer: 10725143.1
(22) Anmeldetag: 11.06.2010
(51) Int. Cl.: G10K 11/16, B32B 5/08, B32B 5/32, B32B 27/12, D06N 3/00, E04B 1/84

(54) **TEXTILES FLÄCHENGEBILDE MIT MIKROKANÄLEN**
Textile area-measured material with micro-channels
Structures plates textiles dotées de micro-canaux

(30) Priorität: 15.06.2009 EP 09162697
(43) Veröffentlichungstag der Anmeldung: 25.04.2012
(73) Patentinhaber: Mehler Texnologies GmbH, 41836 Hückelhoven (DE)
(72) Erfinder: CALLHOFF, Christian Franz, 52062 Aachen (DE); ERDMANN, Carina, 41836 Hückelhoven (DE)
(74) Vertreter: Schröder, Richard
(86) Internationale Anmeldenummer: PCT/EP2010/058222
(87) Internationale Veröffentlichungsnummer: WO 2010/145997

(56) Entgegenhaltungen:
- EP-A2- 0 081 850
- DE-A1- 3 643 481
- DE-A1- 19 923 436
- DE-A1-102004 048 542
- DE-A1-102005 012 166
- DE-C1- 19 754 107
- FUCHS H V ET AL: "Eisatz mikro-perforierter Platten als Schallabsorber mit inhärenter Dämpfung" ACUSTICA, S. HIRZEL VERLAG, STUTTGART, DE, Bd. 81, 1. Januar 1995 (1995-01-01), Seiten 107-116, XP002097650 ISSN: 0001-7884
- "DIN EN ISO 10534-1: Akustik - Bestimmung des Schallabsorptionsgrades und der Impedanz in Impedanzrohren - Teil 1 - Verfahren mit Stehwellenverhältnis" Oktober 2001 (2001-10), Beuth Verlag , XP002556311 das ganze Dokument
- "DIN EN ISO 10534-2: Akustik - Bestimmung des Schallabsorptionsgrades und der Impedanz in Impedanzrohren - Teil 2 - Verfahren mit Übertragungsfunktion" Oktober 2001 (2001-10), Beuth Verlag , XP002556312 das ganze Dokument

## Beschreibung

Die Erfindung betrifft ein textiles Flächengebilde mit Mikrokanälen.

Das textile Flächengebilde wird bevorzugt zur Schallabsorption verwendet.

Textile Flächengebilde, etwa zur Schallabsorption, sind allgemein bekannt. Beispielsweise beschreibt die Druckschrift DE 10 2004 048 542 einen Schallabsorber, der ein textiles Flächengebilde umfasst, in dem schlitzförmige Mikroöffnungen vorhanden sind. Die Mikroöffnungen können durch eine entsprechende Bindungstechnik bei der Herstellung des textilen Flächengebildes, insbesondere das Weglassen oder Entfernen mindestens eines Fadens, gebildet werden. In der Druckschrift wird auch vorgeschlagen, dass die Oberfläche des textilen Flächengebildes behandelt wird, wobei insbesondere eine Beschichtung der Oberfläche vorgeschlagen wird. In Bereichen, in denen später die Mikroöffnungen vorgesehen sind, soll jedoch eine solche Beschichtung nicht vorliegen. Nachteilig bei dem beschriebenen Stand der Technik ist die fehlende Stabilität der Mikroöffnungen innerhalb des textilen Flächengebildes. Mikroöffnungen, die auf diese Weise entstanden sind, können leicht ungewollt vergrößert werden, da durch das Entfernen eines Fadens das Textil instabil wird und sich ungewollt weitere Fäden aus dem Verbund lösen können. Ohne Beschichtungsmaterial um die Mikroöffnungen herum, können die Mikroöffnungen zudem schnell "ausfransen", wenn das Textil gedehnt oder gestreckt wird.

Aus der Druckschrift DE 197 54 107 ist ein Schallabsorber bekannt, der aus einer mikroperforierten Folie gebildet wird. Der in der Druckschrift beschriebene Schallabsorber soll nur aus frei aufgespannten ebenen, durchhängenden, gekrümmten oder beliebig gefalteten mikroperforierten Folien, Blechen oder Platten aus Materialien wie Kunststoff, Metall oder Holz bestehen. Die Verwendung eines gewobenen Textils (Vorhangstoff) wird nach der Lehre der Druckschrift als schlechter bezüglich der Schallabsorption angesehen als die vorgeschlagene Folie.

In der Druckschrift DE 199 23 436 wird ein flächenförmiges Element beschrieben, das eine sogenannte low-e-Schicht aufweist, wobei die low-e-Schicht Energie zum Kühlen sparen soll. Das Element kann auch eine Mikroperforierung aufweisen, wobei die Mikroperforierung so auszuführen ist, dass die dadurch entstehenden offenen Schnittkanten gleichzeitig während der Perforation zu versiegeln sind. Die Versiegelung wird nach der Lehre des Dokuments erforderlich damit keine Feuchtigkeit in das Gewebe dringen kann.

Aus der Druckschrift DE 36 43 481 ist eine Tapetenbahn bekannt, die zumindest im Bereich von Kopplungsöffnungen einer Absorberplatte luftdurchlässig porös ist. Die Tapetenbahn kann auf einer porösen Zwischenschicht aus einem Stapelfaservlies oder einem Stapelfasergewebe angeordnet sein, wobei die poröse Zwischenschicht die Schallabsorption verbessern soll. Die poröse Zwischenschicht verhindert auch, dass die Öffnungen durch die Tapetenbahn hindurch sichtbar werden.

In Dokument EP 0 081 850 wird ein Bekleidungsstück mit einer wasserdichten Funktionsschicht beschrieben. In einem ersten Ausführungsbeispiel dieses Dokuments liegt eine wasserdichte und wasserdampfdurchlässige insbesondere aus mikroporösem Material gebildete Funktionsschicht vor, die mit einem Gewebe laminiert ist. Das Gewebe selber weist keine gebildeten Mikrokanäle auf. In einem zweiten Ausführungsbeispiel ist die mikroporöse Funktionsschicht beidseitig mit einer Abriebsschutzschicht laminiert, wobei ebenfalls keine gebildeten Mikrokanäle die genannten Schichten durchdringen.

Die Aufgabe der vorliegenden Erfindung war es ein textiles Flächengebilde zu schaffen, das formstabile Mikroöffnungen aufweist.

Gelöst wird die Aufgabe durch ein textiles Flächengebilde gemäß Anspruch 1

Da die Mikrokanäle sowohl durch die erste Beschichtungslage als auch durch die Gewebelage verlaufen, werden die Form und die Größe der Mikrokanäle sowohl durch die Beschichtungslage als auch durch die Gewebelage fixiert. Da das Beschichtungsmaterial vollflächig auf der Gewebelage liegt, ist zudem jede Öffnung der Mikrokanäle (von der ersten Oberseite der Gewebelage aus gesehen) im Wesentlichen vollständig durch Beschichtungsmaterial umgeben. Selbst die Öffnungen der Mikrokanäle, die - auf Grund ihrer Position an einer Außenseite des textilen Flächengebildes - besonderen mechanischen Belastungen (beispielsweise durch Anfassen und Reinigen) ausgesetzt sind, werden durch das Beschichtungsmaterial stabilisiert und formstabil gehalten. Insgesamt weisen die Mikrokanäle gemäß der Erfindung somit auch noch lange nach ihrer Herstellung eine Mikrostrukturgröße auf und sind nicht ungewollt durch ein "Ausfransen" vergrößert. Da die Gewebelage zur Bildung der Mikrokanäle so durchdrungen wird, dass in einige Mikrokanäle Filamente der Gewebelage in die Mikrokanäle hineinreichen, wird verhindert, dass sich diese Mikrokanäle nach der Entfernung des Perforationsgegenstandes wieder verschließen. Mikrokanäle, die Filamente im inneren aufweisen bleiben somit vorteilhaft geöffnet und können daher besonders gut zur Schallabsorption verwendet werden.

Die erste Beschichtungslage besteht aus dem gleichen Material wie die zweite Beschichtungslage oder die erste Beschichtungslage weist den gleichen Aufbau wie die zweite Beschichtungslage auf, wobei die gleichen Materialien für den Aufbau der ersten und der zweiten Beschichtungslage verwendet wurden.

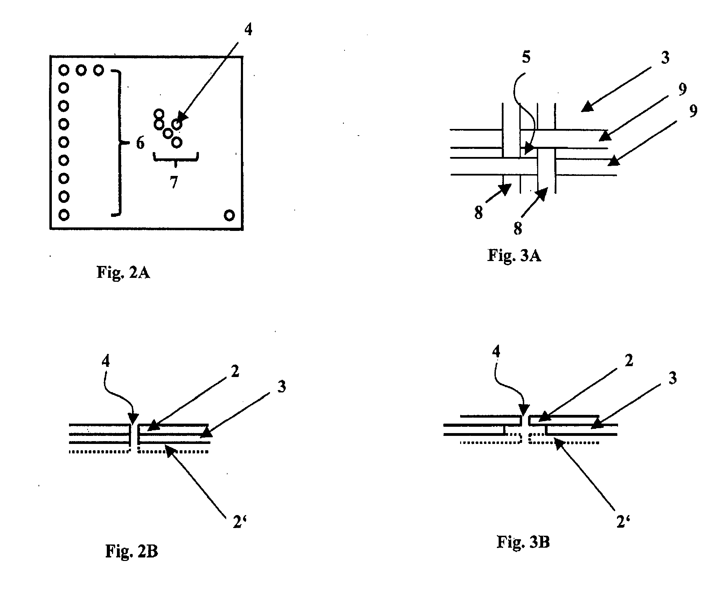

Mikrokanäle, die durch die erste Beschichtungslage und durch die Gewebelage verlaufen, müssen nicht zwangsläufig das Gewebe durchstoßen. Beispielsweise kann ein Mikrokanal so durch das Gewebe gehen, dass er auf Durchlässe im Gewebe trifft und so weder einen Kettfaden noch einen Schussfaden durchdringt. Auch Mikrokanäle, die keinen Kett und/oder Schussfaden durchdringen, weisen in ihrer seitlichen Begrenzung Beschichtungsmaterial und Fasermaterial auf, da die Durchlässe im Gewebe von Fasermaterial umgeben sind. Bevorzugt weisen die meisten der im textilen Flächengebilde vorkommenden Mikrokanäle in ihrer seitlichen Begrenzung Beschichtungsmaterial und Fasermaterial auf. Die Beschaffenheit der seitlichen Begrenzung der Mikrokanäle wird in einem nachfolgenden Teil der Beschreibung anhand der Figur 2B und der Figur 3B näher beschrieben.

Unter einem textilen Flächengebilde mit Mikrokanälen, bei dem zumindest in einem Teil der Mikrokanäle in ihrer seitlichen Begrenzung Beschichtungsmaterial und Fasermaterial aufweisen, soll ein textiles Flächengebilde verstanden werden, bei dem bevorzugt 10 bis 95% aller im textilen Flächengebilde vorhandenen Mikrokanäle in ihrer seitlichen Begrenzung sowohl Beschichtungsmaterial als auch Fasermaterial aufweisen. Bevorzugt weisen 20% bis 70% der gebildeten Mikrokanäle Filamente im Inneren auf, so dass diese Mikrokanäle auch nach der Entfernung des Perforationsgegenstandes geöffnet bleiben. Besonders bevorzugt weisen 40 bis 95% und ganz besonders bevorzugt weisen 70 bis 95% aller im textilen Flächengebilde vorhandenen Mikrokanäle in ihrer seitlichen Begrenzung sowohl Beschichtungsmaterial als auch Fasermaterial auf.

Das textile Flächengebilde kann nur eine Gewebelage oder zwei und mehr Gewebelagen aufweisen. Bei der Verwendung einer Mehrzahl von Gewebelagen können die Gewebelagen gleich oder unterschiedlich zueinander aufgebaut sein.

Ein textiles Flächengebilde mit unterschiedlich aufgebauten Gewebelagen liegt beispielsweise vor, wenn eine erste Gewebelage eine Leinwandbindung und eine zweite Gewebelage eine Atlasbindung aufweist. Unterschiedliche Gewebelagen können aber auch dadurch entstehen, dass die Gewebelagen unterschiedliche Garntypen und/oder Gamarten aufweisen und/oder die Gewebelagen eine unterschiedliche Fadenzahl pro cm² in Kett- und/oder Schussrichtung haben.

Jede Gewebelage weist eine flächige Erstreckung mit zwei Haupterstreckungsflächen als Oberfläche auf. Die Haupterstreckungsflächen werden dabei von der Breite und der Länge der Flächen gebildet.

Das textile Flächengebilde wiest eine Gewebelage auf, die auf beiden Oberflächen vollflächig beschichtet ist. Sowohl die erste Beschichtungslage als auch die zweite Beschichtungslage sind dabei aus dem gleichen Material aufgebaut. Bei der zweiten Oberfläche der Gewebelage handelt es sich um die zweite Haupterstreckungsfläche der Gewebelage, die bevorzugt parallel und gegenüber zur ersten Haupterstreckungsfläche liegt. Unter einer vollflächigen Beschichtung der ersten und zweiten Oberfläche der Gewebelage soll verstanden werden, wenn bevorzugt mindestens 80% der ersten und der zweiten Oberfläche der Gewebelage durch die erste beziehungsweise zweite Beschichtungslage beschichtet sind. Die Prozentangabe bezieht sich dabei auf den Flächeninhalt der ersten und der zweiten Oberfläche mit Mikrokanälen, wobei der durch die Mikrokanäle fehlende Flächeninhalt nicht von der Gesamtfläche der Oberfläche subtrahiert wird. In einer Ausführungsform ist die erste Beschichtungslage auf der ersten Oberfläche nur über die Gewebelage mit der zweiten Beschichtungslage auf der zweiten Oberfläche in Kontakt. Das bedeutet, die erste Beschichtungslage und die zweite Beschichtungslage berühren sich im textilen Flächengebilde bevgrmugt nicht. Damit wird verhindert, dass die Mikrokanäle als seitliche Begrenzung lediglich Beschichtungsmaterial aufweisen. In einer anderen Ausführungsform steht das Beschichtungsmaterial der ersten Beschichtungsfläche durch Durchlässe der Gewebelage mit dem Beschichtungsmaterial der zweiten Beschichtungsfläche in Kontakt, wobei auch dann insgesamt im textilen Flächengebilde die Mikrokanäle so ausgeführt sind, dass Mikrokanäle durch die Beschichtungslage und durch die Gewebelage verlaufen und zumindest ein Teil der Mikrokanäle in ihrer seitlichen Begrenzung Beschichtungsmaterial und Fasermaterial aufweisen und Filamente der Gewebelage in die Mikrokanäle hineinreichen.

In einer weiteren bevorzugten Ausführungsform weist die Gewebelage auf einer Oberfläche vollflächig eine dritte Beschichtungslage aus einem weiteren Beschichtungsmaterial auf.

Mikroöffnungen, die nur aus Beschichtungsmaterial aufgebaut sind, sind aus der Druckschrift DE 103 46 783 bekannt. In dieser Druckschrift wird ein schallabsorbierendes Gewebe mit Mikrolochung vorgestellt, dessen Mikrolochungen durch das Aufheizen und Wegpusten von Beschichtungsmaterial hergestellt werden. Diese Mikrolochungen weisen im gesamten Lochkanal Beschichtungsmaterial auf. Mikrokanäle mit seitlicher Begrenzung aus Beschichtungsmaterial haben jedoch den Nachteil, dass kein Fasermaterial mehr in den Mikrokanal hineinreicht. Es hat sich aber für einen Fachmann als überaus überraschend herausgestellt, dass wahrscheinlich durch Fasermaterial im Mikrokanal die Schallabsorption gegenüber herkömmlichen Schallabsorbern ohne Fasermaterial im Mikrokanal wesentlich verbessert werden kann. Insbesondere wird vermutet, dass Filamente, die in den Mikrokanal hineinreichen, die Schallabsorption verbessern, da sie zu einer Reibung und dadurch zu energetisch / kinetischen Reibungsverlusten führen. Das erfindungsgemäße textile Flächengebilde weist daher bevorzugt überwiegend Mikrokanäle auf, bei denen Filamente in die Mikrokanäle hineinreichen.

Im Folgenden wird die Gewebelage des textilen Flächengebildes näher beschrieben, wobei sich die Beschreibung auf eine einzelne Gewebelage bezieht. Ein erfindungsgemäßes textiles Flächengebilde mit mehr als einer Gewebelage kann zwei oder mehrere von der im Folgenden beschriebenen Gewebelage aufweisen.

Als Gewebelage für das textile Flächengebilde kann beispielsweise ein Gewebe mit einer Köperbindung oder einer Atlasbindung verwendet werden. Weiterhin ist es möglich, dass das Gewebe eine Panama-, Halbpanama-, Rips-, Ripsstopp-, Gedrebe- und/oder Schussraschelbindungen aufweist. Besonders bevorzugt ist jedoch, wenn das Gewebe eine Leinwandbindung aufweist. Die Leinwandbindung ist bevorzugt eine 1/1 Leinwandbindung.

Weiterhin bevorzugt weist das Gewebe der Gewebelage eine Fadenzahl von 0,5 bis 50 Fäden pro cm (Fd/cm) in Kett- und Schussrichtung, besonders bevorzugt von 1 bis 42 Fd/cm, ganz besonders bevorzugt von 2 bis 10 Fd/cm in Kett- und Schussrichtung auf.

Bevorzugt weist die Gewebelage Garne mit einem Titer von 150 bis 3500 dtex, besonders bevorzugt von 167 bis 3300 detx und ganz besonders bevorzugt von 900 bis 1100 dtex auf.

Weiterhin bevorzugt weisen die Garne oder zumindest ein Garn der Gewebelage eine Drehung von Z/S60 bis Z/S400 und V0 und T0 auf.

Das Flächengewicht der Gewebelage beträgt bevorzugt 100 bis 3000 Gramm pro m² (g/m²), besonders bevorzugt 300 bis 2000 g/m² und ganz besonders bevorzugt 500 bis 1500 g/m².

Die Dicke der Gewebelage (ohne Beschichtungslagen) beträgt bevorzugt 0,1 - 1 mm, besonders bevorzugt 0,2 - 0,8 mm und ganz bevorzugt 0,25 - 0,7 mm.

Das Gewebe der Gewebelage kann aus Garne und/oder Tapes hergestellt sein. Beispielsweise ist es möglich, dass das Gewebe in Kettrichtung Tapes und in Schussrichtung Garn aufweist. Die Tapes können beispielsweise aus Monofilamenten aufgebaut werden und die Garne können Multifilametgarne sein. Die Gewebelage kann aber auch (vollständig) aus Monofilamentgarnen hergestellt werden, wobei der Titer der Monofilamente dann bevorzugt so gewählt wird, dass einzelne Monofilamente teilweise oder vollständig in einen Mikrokanal hineinragen können. Besonders bevorzugt wird die Gewebelage jedoch vollständig aus Multifilamentgarnen aufgebaut. Bevorzugte Multifilamentgarne weisen beispielsweise 10 bis 1000 Filamente, besonders bevorzugt 50 bis 800 und ganz besonders bevorzugt 100 bis 600 Filamente auf.

Als Garn zur Bildung der Gewebelage können Garne mit natürlichen und/oder künstlichen Fasern, sowie Garne aus Mischungen von künstlichen und natürlichen Fasern verwendet werden. Natürliche Fasern sind beispielsweise Baumwollfasem oder Wollfasern. Künstlich hergestellte Fasern sind beispielsweise Polyesterfasern, Polyolefinefasem oder Polyamidfasern wie Para-Aramidfasem.

Als Beschichtungsmaterial für die erste Beschichtungslage und die zweite Beschichtungslage können Polyvinylchlorid, Polyoelfine, wie zum Beispiel Polyethylen oder Polypropylen, metallocene Plastomere, Polyurethan, Alcryn, Silikon, Acrylat und/oder beliebige Mischungen aus den eben genannten Materialien eingesetzt werden. Es versteht sich, dass die erste und die zweite Beschichtungslage auch im Wesentlichen vollständig aus einem oder mehreren der genannten Materialien bestehen kann. Bevorzugt weist die erste und die zweite Beschichtungslage Polyvinylchlorid, Polyolefine, metallocene Plastomere und/oder Polyurethan auf. Besonders bevorzugt besteht die erste und die zweite Beschichtungslage im wesentlichen vollständig aus Polyvinylchlorid, Polyolefine, metallocene Plastomere und/oder Polyurethan. Die erste und die zweite Beschichtungslage können einlagig oder mehrlagig (Multiayer-Struktur) aufgebaut sein. Bei einem mehrlagigen Aufbau der ersten und zweiten Beschichtungslage ist die Beschichtungslage (erste und zweite Beschichtungslage) aus mehr als einer Lage aufgebaut. Jede Lagen kann dabei aus unterschiedlichen Beschichtungsmaterialien bestehen oder die Lagen bestehen aus dem gleichen Beschichtungsmaterial. Zusätzlich oder alternativ hierzu kann die Beschichtungslage bei einem mehrlagigen Aufbau und bei einem einlagigen Aufbau auch eine zusätzliche Schicht aufweisen. Die zusätzliche Schicht kann beispielsweise eine Schutzschicht für die Beschichtungslage sein, welche die Beschichtungslage vor Feuchtigkeit, Pilzbefall, Insektizidbefall und/oder Schmutz schützen soll. Die zusätzliche Schicht besteht nicht aus einem normalen Beschichtungsmaterial. Die Lackierung einer Beschichtungslage, so dass eine Lackschicht auf der Beschichtungslage entsteht, ist ein Beispiel für eine zusätzliche Schicht.

Eine Beschichtungslage, die im Wesentlichen aus nur einem Material besteht, besteht bevorzugt zu über 40%, besonders bevorzugt zu über 70% und ganz besonders bevorzugt zu über 95% aus dem genannten Material.

Die erste und die zweite Beschichtungslage können flammfest und/oder farbig ausgebildet sein. Weiterhin ist es denkbar, dass die erste und/oder die zweite Beschichtungslage besondere haptische Eigenschaften, wie Prägungen, aufweist. Auch besondere wärmeleitende oder wärmeisolierende Eigenschaften sind für die erste und/oder zweite Beschichtungslage möglich.

Bei der Verwendung von mehr als einer Gewebelage kann jede Gewebelage einseitig oder beidseitig eine Beschichtungslage aufweisen oder nur einige der Gewebelagen weisen eine oder zwei Beschichtungslagen auf. Es ist auch möglich, mehrere voneinander unterschiedlich beschichtete Gewebelagen zu verwenden, wobei bei jeder einzelnen weiteren Gewebelage die erste und die zweite Beschichtungslage gleich oder unterschiedlich zueinander sind. Bei der Verwendung einer Mehrzahl von Gewebelagen ist jedoch mindestens eine Gewebelage dabei, die beidseitig die gleiche Beschichtung aufweist, wobei die erste Beschichtungslage aus dem gleichen Material besteht wie die zweite Besch ichtungslage.

Vorzugsweise weisen die Mikrokanäle in der Beschichtungslagenoberfläche (Oberfläche der ersten Beschichtungslage) einen Durchmesser von 50 bis 1000 µm, bevorzugt von 100 bis 400 µm auf. Besonders bevorzugt weisen die Mikrokanäle in der Beschichtungslagenoberfläche einen Durchmesser von 150 bis 300µm und ganz besonders bevorzugt von 200 bis 250µm auf.

Bevorzugt beträgt die Anzahl der Mikrokanäle pro cm² im textilen Flächengebilde 1 bis 250, besonders bevorzugt 4 bis 150 und ganz besonders bevorzugt 60 bis 80.

Es ist nicht erforderlich, dass das textile Flächengebilde über seine gesamte Fläche gleichmäßig mit Mikrokanälen versehen ist. Für die schallabsorbierende Wirkung ist es oftmals ausreichend, wenn das textile Flächengebilde nur in Teilbereichen oder in Segmenten Mikrokanäle aufweist. Selbstverständlich ist auch eine gleichmäßige Verteilung der Mikrokanäle im textilen Flächengebilde denkbar. Die Mikrokanäle können im textilen Flächengebilde geordnet oder ungeordnet angeordnet werden. Unter einer geordneten Anordnung sollen beispielsweise regelmäßig aufgebaute Reihen, Gitter aber auch regelmäßig auftretende Häufungen von Mikrokanälen im textilen Flächengebilde verstanden werden. Eine regelmäßige Anordnung von Mikrokanälen liegt auch vor, wenn die Mikrokanäle in unterschiedlich aufgebauten Reihen in dem textilen Flächengebilde angeordnet sind, solange die Reihen einen regelmäßigen Aufbau besitzen. Eine ungeordnete Anordnung der Mikrokanäle innerhalb des textilen Flächengebildes liegt vor, wenn die Mikrokanäle ohne ein sich wiederholendes Muster in dem textilen Flächengebilde vorliegen. Eine willkürliche und zufällige Anordnung der Mikrokanäle innerhalb des textilen Flächengebildes ist ein Beispiel für eine ungeordnete Anordnung der Mikrokanäle.

Bevorzugt beträgt das Verhältnis der Summe der Kanaleintrittsflächen in der ersten Beschichtungslage zur Gesamtfläche der ersten Beschichtungslage 0,03 bis 30%. Unter der Gesamtfläche der ersten Beschichtungslage soll die Fläche der ersten Beschichtungslage verstanden werden, bevor die Mikrokanäle in das textile Flächengebilde eingebracht wurden.

Gegenüber starren gelochten Elementen zur Schallabsorption, wie sie zum Beispiel in der Schrift DE 43 15 759 beschrieben werden, weisen die aus beschichteten Gewebe bestehenden erfindungsgemäßen textilen Flächengebilde eine hohe Flexibilität und Verformbarkeit auf. Dieses bietet vielfältige Vorteile bezüglich der Ausgestaltung von Elementen zur Schallabsorption, Schalldämmung oder zum Schallschutz. Die Flexibilität des textilen Flächengebildes ist dabei so hoch, dass das textile Flächengebilde auch mühelos um kleine Gegenstände und enge Kurven drapiert werden kann, wobei ein inniger Kontakt zwischen Gegenstand und textilem Flächengebilde entsteht.

Ein weiterer Gegenstand der Erfindung betrifft ein Verfahren zur Herstellung eines textilen Flächengebildes. Bei dem Flächengebilde handelt es sich um das Flächengebilde gemäß dem Anspruch 1, wobei das textile Flächengebilde weitere Merkmale gemäß der Unteransprüche 2 bis 10 aufweisen kann.

Bei dem Verfahren wird bevorzugt eine erste Oberfläche und eine zweite Oberfläche der Gewebelage durch ein vollflächige auf die erste Oberfläche und die zweite Oberfläche der Gewebelage aufgebrachtes Beschichtungsmaterial in einem ersten Beschichtungsvorgang beschichtet, so dass eine erste Beschichtungslage und eine zweite Beschichtungslage aus dem gleichen Beschichtungsmaterial gebildet werden. Nach dem Beschichtungsvorgang erfolgt ein Lochvorgang (beispielsweise durch Einstanzen von Nadeln mit geeignetem Durchmesser), wobei bei dem Lochvorgang die erste Beschichtungslage, die zweite Beschichtungslage und die Gewebelage zur Bildung der Mikrokanäle durchdrungen werden.

Bevorzugt wird die erste Beschichtungslage und/oder die zweite Beschichtungslage vor dem Lochvorgang mit einer zusätzlichen Schicht versehen. Besonders bevorzugt wird die erste und/oder die zweite Beschichtungslage zur Bildung der zusätzlichen Schicht lackiert, so dass eine zusätzliche Lackschicht entsteht.

Wie bereits beschrieben wird das textile Flächengebilde bevorzugt zur Schallabsorption verwendet. Eine Verwendung des textilen Flächengebildes könnte beispielsweise in der Verwendung als Vorhang erfolgen. Ein solcher Vorhang kann beispielsweise als Trennung in Turnhallen oder großen Sälen verwendet werden aber auch für die Verdunkelung im Kino, Theater oder Museum benutzt werden. Weiterhin ist es auch denkbar, dass so ein Vorhang im Wesentlichen transparent ausgestaltet wird, so dass der Vorhang als Art Gardine verwendet werden kann. Im letzten Fall kann die erste und/oder zweite Beschichtungslage so ausgebildet werden, dass sie ein gardienenähnliches Muster aufweist. Denkbar ist auch, dass das textile Flächengebilde - beispielsweise durch das Aufbringen von Prägungen als Muster auf der ersten und/oder zweiten Beschichtungslage - besondere Reflexions- und/oder Projektionseigenschaften aufweist. Durch die besonderen Reflexions- und/oder Projektionseigenschaften kann das optische Erscheinungsbild des textilen Flächengebildes vorteilhaft beeinflusst und verändert werden. Durch eine Prägung auf der ersten und/oder zweiten Beschichtungslage können zudem die Schallabsorptionseigenschaften des textilen Flächengebildes beeinflusst werden.

Die Erfindung wird im Folgenden anhand von Figuren und Beispielen näher beschrieben.
- Figur 1: zeigt schematisch eine Explosionsdarstellung eines textilen Flächengebildes.
- Figur 2A: zeigt schematisch mögliche Mikrokanalanordnungen.
- Figur 2B: zeigt schematisch einen Querschnitt durch das textile Flächengebilde.
- Figur 3A: zeigt schematisch die Draufsicht auf eine Gewebelage.
- Figur 3B: zeigt schematisch den Querschnitt durch das textile Flächengebilde.
- Figur 4: zeigt schematisch den gemessenen Schallabsorptionsgrad einer Probe des textilen Flächengebildes mit einem Wandabstand von 50mm.
- Figur 5: zeigt schematisch den gemessenen Schallabsorptionsgrad einer Probe des textilen Flächengebildes mit rückseitig reflexionsarmen Abschluss.

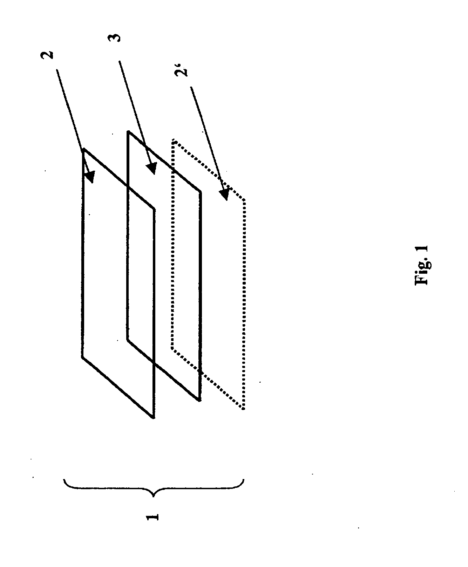

In der Figur 1 ist schematisch eine Explosionsdarstellung eines textilen Flächengebildes 1 dargestellt. Das textile Flächengebilde 1 weist in diesem Ausführungsbeispiel eine erste Beschichtungslage 2, eine Gewebelage 3 und eine zweite Beschichtungslage 2' auf. Im ersten Ausführungsbeispiel umfasst das textile Flächengebilde 1 also nur die erste Beschichtungslage 2, die Gewebelage 3 und die zweite Beschichtungslage 2'. Keine weiteren Lagen werden benötigt. Die erste Beschichtungslage 2 liegt auf der ersten Oberfläche der Gewebelage 3 auf und ist mit der Gewebelage 3 durch den Beschichtungsvorgang verbunden. Die zweite Beschichtungslage 2' liegt auf der zweiten Oberfläche der Gewebelage 3 auf und ist ebenfalls durch den Beschichtungsvorgang mit dieser verbunden.

In Figur 2A ist schematisch eine Draufsicht auf ein textiles Flächengebilde 1 dargestellt. Das textile Flächengebilde 1 weist Mikrokanäle 4 auf, die geordnet oder ungeordnet auf dem (beziehungsweise in dem) textilen Flächengebilde 1 angeordnet sind. Im Abschnitt 6 der Figur 2A ist ein Beispiel für eine geordnete Anordnung der Mikrokanäle 4 gezeigt. Hierbei bilden die Mikrokanäle 4 ein Gittermuster innerhalb des textilen Flächengebildes 1. Im Abschnitt 7 der Figur 2A ist ein Beispiel für eine ungeordnete Anordnung der Mikrokanäle 4 innerhalb des textilen Flächengebildes 1 gezeigt. Bei der ungeordneten Anordnung verteilen sich die Mikrokanäle 4 zufällig und ohne wiederkehrende Regelmäßigkeit im textilen Flächengebilde 1. Zur Herstellung der Mikrokanäle 4 im textilen Flächengebilde 1 werden bevorzugt alle Schichten des textilen Flächengebildes gelocht. Der Lochvorgang erfolgt dabei erst, wenn alle Schichten des textilen Flächengebildes bereits vollständig ausgebildet sind. Das bedeutet beispielsweise, dass der Lochvorgang erst dann erfolgt, wenn die erste Beschichtungslage 2 und die zweite Beschichtungslage 2' bereits auf der Gewebelage 3 aufgebracht worden sind (und beispielsweise erkaltet sind). Der Lochvorgang erfolgt bevorzugt durch das Durchstoßen oder Durchstanzen eines Gegenstandes (Lochwerkzeug) durch die Beschichtungslagen 2, 2' und durch die Gewebelage 3. Die Lochung kann so erfolgen, dass der Durchmesser der gebildeten Mikrokanäle 4 im Querschnitt des textilen Flächengebildes 1 homogen ist. Das bedeutet, dass der Durchmesser eines Mikrokanals 4 in der Ebene der ersten Beschichtungslage 2, der Gewebelage 3 und der zweiten Beschichtungslage 2' etwa gleich ist. Von homogenen Mikrokanälen soll aber auch dann gesprochen werden, wenn der Durchmesser eines Mikrokanals in der ersten Beschichtungslagenoberfläche in etwa gleich dem Durchmesser in der zweiten Beschichtungslagenoberfläche ist. Bei dem Lochvorgang können auch nicht homogene Mikrokanäle 4 gebildet werden. Bei den nicht homogenen Mikrokanälen 4 verjüngt sich der Durchmesser beispielsweise von der ersten Beschichtungslage 2 ausgehend bis zur zweiten Beschichtungslage 2'. Solche Mikrokanäle 4 können beispielsweise dadurch entstehen, dass keilförmige oder kegelförmige Gegenstände für die Durchstoßung des textilen Flächengebildes 1 verwendet werden. Weiterhin ist es denkbar, dass Mikrokanäle 4 bei dem Lochvorgang entstehen, die ausgehend von der ersten Beschichtungslage 2 einen sich verjüngenden Verlauf und ab der Gewebelage 3 bis zur Beschichtungslagenoberfläche der zweiten Beschichtungslage 2' einen sich erweiternden Vedauf zeigen. Ein solcher Mikrokanal 4 hat dann die Form von einem Hyperboloid oder die Form eines Doppelkegels. Solche Mikrokanäle 4 können entstehen, wenn sich das Gewebe nach dem Lochvorgang zusammenzieht, beziehungsweise schrumpft, während die erste und/oder zweite Beschichtungslage 2, 2' nicht schrumpfen. Darüber hinaus kann sich die Kontur des Mikrokanals durch die Eigenschaften der Lagen (also der Beschichtungslagen und/oder Gewebelage) verändern. Eigenschaften der Lagen, die eine solche Veränderung der Kontur bewirken können, sind beispielsweise die Festigkeit, und die Elastizität der Lagen.

In Figur 2B ist schematisch ein erster Querschnitt durch das textile Flächengebilde 1 dargestellt. Das textile Flächengebilde 1 weist auch in diesem Ausführungsbeispiel eine erste Beschichtungslage 2, eine Gewebelage 3 und eine zweite Beschichtungslage 2' auf. Der Mikrokanal 4 verläuft durch die erste Beschichtungslage 2, durch die Gewebelage 3 und auch durch die zweite Beschichtungslage 2', wobei der Durchmesser des Mikrokanals 4 in jeder Lage (erste Beschichtungslage 2, Gewebelage 3, zweite Beschichtungslage 2') homogen ist. Zur Bildung des im Figur 2B dargestellten Mikrokanals 4 wurde die Gewebelage 3 durchstochen. Das bedeutet, dass der Kettfaden der Gewebelage 3, der Schussfaden der Gewebelage 3 oder sowohl der Kettfaden als auch der Schussfaden der Gewebelage 3 durchstochen wurden. In diesem speziellen Fall wurde daher die Gewebelage 3 nicht nur durchdrungen sondem auch durchstoßen oder durchstochen. Durch die Durchstoßung oder Durchstechung der Gewebelage 3 reichen dabei Filamente des Kett- und/oder Schussfadens in den Mikrokanal 4 hinein. Durch die Beschädigung des Kettfadens und/oder des Schussfadens können zudem auch Filamente der Fäden in den Mikrokanal hineingezogen werden. Es ist jedoch auch möglich, dass beim Lochvorgang die Filamente der Gewebelage zunächst zur Seite gedrängt und dann nach Entfernung des Lochwerkzeuges wieder in den Querschnitt des Mikrokanals hineinragen.

Zur Bildung eines Mikrokanals 4 kann jedoch auch die Gewebelage 3 durchdrungen werden, ohne dass die Gewebelage durchstochen oder durchstoßen wurde. Das bedeutet, dass weder der Kettfaden noch der Schussfaden der Gewebelage 3 durchdrungen wird. In Figur 3A ist schematisch ein Teilbereich einer Gewebelage 3 dargestellt. Die Gewebelage 3 weist Durchlässe 5 auf. Die Durchlässe 5 entstehen durch die Anordnung der Kettfäden 8 und Schussfäden 9 und die Bindung innerhalb der Gewebelage. Es soll dabei deutlich gemacht werden, dass die Durchlässe 5 je nach verwendeter Bindung und je nach verwendeten Garntypen unterschiedliche groß und mit unterschiedlicher Häufigkeit in der Gewebelage 3 vorkommen können. Beispielsweise kann ein offenes Atlasgewebe als Gewebelage 3 eine größere Anzahl von Durchlässen 5 aufweisen als ein dichtgewebtes Leinwandgewebe. Weiterhin sind die Durchlässe 5 bei der Verwendung von Garnen mit hohem Garntiter größer als bei der Verwendung von Garnen mit kleinen Garntitern. Bei einem Lochvorgang kann das Lochwerkzeug auf einen Durchlass 5 treffen und so durch die Gewebelage 3 gelangen, ohne dass ein Kettfaden 8 oder ein Schussfaden 9 der Gewebelage 3 durchdrungen werden muss.

In Figur 3B ist im Querschnitt schematisch ein Mikrokanal 4 dargestellt, bei dem das Lochwerkzeug die Gewebelage 3 durch einen Durchlass 5 durchdrungen hat. Auch in diesem Fall weist der gebildete Mikrokanal 4 in seiner seitlichen Begrenzung Beschichtungsmaterial - durch die Durchdringung der Beschichtungslage 2 - und Fasermaterial - durch die Durchdringung der Gewebelage 3 - auf, ohne dass die Gewebelage 3 durchstoßen werden musst. In diesem Fall ist jedoch der Durchmesser des Mikrokanals 4 in der Ebene der Gewebelage 4 größer als der Durchmesser des Mikrokanals 4 in den Beschichtungsoberflächen. Filamente, die sich aus dem Kett- und/oder Schussfaden 8, 9 gelöst haben können auch in diesem Beispiel in den Mikrokanal 4 hineinreichen.

Es soll deutlich werden, dass ein textiles Flächengebilde 1 sowohl Mikrokanäle 4 gemäß der Figur 2B als auch Mikrokanäle 4 gemäß der Figur 3B aufweisen können. Wie viele Mikrokanäle 4 nach Figur 2B und wie viele nach Figur 3B im textilen Flächengebilde 1 vorhanden sind, hängt von dem verwendeten Gewebe für die Gewebelage 3 ab. Erfindungswesentlich ist aber, dass zumindest in einem Teil der Mikrokanäle 4 Filamente der Gewebelage 3 in die Mikrokanäle 4 hineinreichen und die Mikrokanäle 4 durch die Beschichtungslage 2 und durch die Gewebelage 3 verlaufen und zumindest ein Teil der Mikrokanäle 4 in ihrer seitlichen Begrenzung Beschichtungsmaterial und Fasermaterial aufweisen. Es soll weiterhin deutlich werden, dass sowohl bei der Bildung eines Mikrokanals 4 nach Figur 2B als auch bei der Bildung eines Mikrokanals 4 nach Figur 3B die Mikrokanäle 4 einen in etwa gradlinigen Verlauf besitzen. Durch beide Mikrokanäle 4 kann eine Grade gelegt werden, wobei die Grade nicht durch die Gewebelage 3 oder durch die Beschichtungslagen 2, 2' verlaufen muss, sondern innerhalb des Mikrokanals 4 verläuft. Bei einem porösen Material ist die poröse Struktur in der Regel so verwinkelt aufgebaut, dass keine Grade durch diese Struktur und gleichzeitig durch eine angrenzende Lage (beispielsweise eine Beschichtungslage) verlaufen kann.

Weiterhin kann das textile Flächengebilde 1 zusätzlich zu den Mikrokanälen 4 mit seitlicher Begrenzung aus Beschichtungsmaterial und Fasermaterial auch weitere Mikrokanäle aufweisen, die beispielsweise nur aus Beschichtungsmaterial bestehen. Solche weiteren Mikrokanäle können dadurch entstehen, dass das Beschichtungsmaterial zur Bildung der ersten und/oder zweiten Beschichtungslage 2, 2' über Ränder der Gewebelage 3 hinaus verteilt wird. Hierdurch können Bereiche im textilen Flächengebilde entstehen, die im Querschnitt keine Gewebelage 3 mehr aufweisen. Weiterhin ist es möglich, dass bei der Verwendung eines sehr offenen Gewebes für die Gewebelage 3 Beschichtungsmaterial der ersten Beschichtungslage 2 durch die Durchlässe 5 gelangt und in Kontakt zu dem Beschichtungsmaterial zur Bildung der zweiten Beschichtungslage 2' kommt. Wird an einer solchen Stelle ein Mikrokanal erzeugt, so weist ein solcher Mikrokanal ebenfalls in seiner seitlichen Begrenzung nur Beschichtungsmaterial und kein Fasermaterial auf. Solche Mikrokanäle machen jedoch nur einen sehr geringen Anteil der Gesamtsumme der Mikrokanäle aus.

Im Folgenden wird die Erfindung anhand von Beispielen erläutert.

Es wurden vier Proben (Probe 1 bis 4) eines erfindungsgemäßen textilen Flächengebildes geprüft. Jede Probe wurde auf die äußere Abmessung von etwa 198x198mm zurechtgeschnitten sowie für weitere Messungen auf einem umlaufenden Holzrahmen spannungsfrei befestigt.

Die Probe 1 wies eine Gewebelage auf, wobei die Gewebelage auf ihrer ersten Oberseite eine erste Beschichtungslage und auf ihrer zweiten Oberseite eine zweite Beschichtungslage aufwies. Die erste und die zweite Beschichtungslage waren aus dem gleichen Material und werden im folgenden nur als Beschichtung bezeichnet.

### Gewebelage:

Bindung: Leinwand 1/1
Garn: Polyester
   o Titer: dtex1100 in Kett- und Schussrichtung
   o Garndrehung: Z60 in Kett- und Schussrichtung
   o Anzahl der Filamente im Garn: ca. 200 bis 250
   o Fadeneinstellung: 9,25 Fäden in Kettrichtung und 10,0 Fäden in Schussrichtung
Flächengewicht der Gewebelage: ca. 227g/m² (± 3,2%)

### Beschichtung:

Material: Polyvinylchlorid (PVC) und Additive

### Kleber:

100 phr (per hunderd rubber) EPVC (emulsion PVC)
90 phr Weichmacher
3,3 phr Stabilisator/handelsüblich für PVC Weichrezepturen
9 phr Füllstoff (Kreide)
6 % auf Ansatzgröße Haftvermittler

### Deckschicht:

100 phr SPVC (Suspensions PVC)
60 phr Weichmacher
11 phr Stabilisator/handelsüblich für PVC Weichrezepturen
49 phr Füllstoff (Kreide)
1,7 phr handelsübliches Verarbeitungshilfsmittel für Weichpvc Rezepturen
0,3 phr Gleitmittel
16 phr Flammschutzmittel
+ diverse Farbbatche zur Einfärbung
Beschichtungsverfahren: Streichbeschichtung und Kalanderbeschichtung
Gewicht der Beschichtung: Gesamtauflage ca. 780 g/m²

### Mikrokanäle:

- Anzahl pro cm²: ca. 30
- Abstand untereinander: 600µm bis 1300µm stochastisch verteilt
- Größe: 100µm bis 150µm
- Form: konisch

Die Dicke des textilen Flächengebildes aufgebaut gemäß Probe 1 betrug 0,80 bis 0,86 mm, das Flächengewicht des textilen Flächengebildes vor der Einbringung der Mikrokanäle betrug 1000g/m² (± 5%).

Die Probe 2 wies eine Gewebelage auf, wobei die Gewebelage auf ihrer ersten Oberseite eine erste Beschichtungslage und auf ihrer zweiten Oberseite eine zweite Beschichtungslage aufwies. Die erste und die zweite Beschichtungslage waren aus dem gleichen Material und werden im folgenden nur als Beschichtung bezeichnet.

### Gewebelage:

Bindung: Leinwand 1/1
Garn: Polyester
   o Titer: dtex1100 in Kettrichtung und 0,5mm Monofilament in Schussrichtung
   o Gamdrehung: Z/S60 in Kettrichtung
   o Anzahl der Filamente im Garn: ca. 200 bis 250
   o Fadeneinstellung: 9,0 Fäden in Kettrichtung und 11,0 Fäden in Schussrichtung
Flächengewicht der Gewebelage: ca. 425g/m² (± 4%)

### Beschichtung:

Material: Polyvinylchlorid und Additive (flammfest ausgerüstet)

### Kleber:

100 phr EPVC
90 phr Weichmacher
3,3 phr Stabilisator/handelsüblich für PVC Weichrezepturen
9 phr Füllstoff (Kreide)
6 % auf Ansatzgröße Haftvermittler

### Deckschicht:

100 phr SPVC
60 phr Weichmacher
11 phr Stabilisator/handelsüblich für PVC Weichrezepturen
49 phr Füllstoff (Kreide)
1,7 phr handelsübliches Verarbeitungshilfsmittel für Weichpvc Rezepturen
0,3 phr Gleitmittel
16 phr Flammschutzmittel
+ diverse Farbbatche zur Einfärbung.
+ Lackschicht/Acryllack 10 g/m² jeweils beidseitig
Beschichtungsverfahren: Streichbeschichtung und Kalanderbeschichtung
Gewicht der Beschichtung: Gesamtauflage ca. 630 g/m²
Zusatzschicht: Prägung

### Mikrokanäle:

- Anzahl pro cm²: ca. 30
- Abstand untereinander: 600µm bis 1300µm stochastisch verteilt
- Größe: 100µm bis 150µm
- Form: konisch

Die Dicke des textilen Flächengebildes aufgebaut gemäß Probe 2 betrug 0,80 bis 0,86 mm, das Flächengewicht des textilen Flächengebildes vor der Einbringung der Mikrokanäle betrug 1050g/m² (± 5%).

Die Probe 3 wies eine Gewebelage auf, wobei die Gewebelage auf ihrer ersten Oberseite eine erste Beschichtungslage und auf ihrer zweiten Oberseite eine zweite Beschichtungslage aufwies. Die erste und die zweite Beschichtungslage waren aus dem gleichen Material und werden im folgenden nur als Beschichtung bezeichnet.

### Gewebelage:

- Bindung: Leinwand 1/1
- Garn: Polyester
   o Titer: dtex1100 in Kett- und Schussrichtung
   o Gamdrehung: Z60 in Kettrichtung und Z100 in Schussrichtung
   o Anzahl der Filamente im Garn: ca. 200 bis 250
   o Fadeneinstellung: 8,0 Fäden in Kettrichtung und 8,8 Fäden in Schussrichtung
Flächengewicht der Gewebelage: ca. 193g/m² (± 3%)

### Beschichtung:

Material: Polyvinylchlorid und Additive (flammfest ausgerüstet)

### Kleber:

100 phr EPVC
90 phr Weichmacher
3,3 phr Stabilisator/handelsüblich für PVC Weichrezepturen
9 phr Füllstoff (Kreide)
6 % auf Ansatzgröße Haftvermittler

### Deckschicht:

100 phr SPVC
60 phr Weichmacher
11 phr Stabilisator/handelsüblich für PVC Weichrezepturen
49 phr Füllstoff (Kreide)
1,7 phr handelsübliches Verarbeitungshilfsmittel für Weichpvc Rezepturen
0,3 phr Gleitmittel
16 phr Flammschutzmittel
+ diverse Farbbatche zur Einfärbung
+ Lackschicht/Acryllack 10 g/m² - beidseitig
Beschichtungsverfahren: Streichbeschichtung und Kalanderbeschichtung
Gewicht der Beschichtung: Gesamtauflage ca. 520 g/m²

### Mikrokanäle:

- Anzahl pro cm²: ca. 30
- Abstand untereinander: 600µm bis 1300µm stochastisch verteilt
- Größe: 100µm bis 150µm
- Form: konisch

Die Dicke des textilen Flächengebildes aufgebaut gemäß Probe 3 betrug 0,59 bis 0,65mm, das Flächengewicht des textilen Flächengebildes vor der Einbringung der Mikrokanäle betrug 710g/m² (± 5%).

Die Probe 4 wies eine Gewebelage auf, wobei die Gewebelage auf ihrer ersten Oberseite eine erste Beschichtungslage und auf ihrer zweiten Oberseite eine zweite Beschichtungslage aufwies. Die erste und die zweite Beschichtungslage waren aus dem gleichen Material und werden im folgenden nur als Beschichtung bezeichnet.

### Gewebelage:

- Bindung: Leinwand 1/1
- Garn: Polyester
   o Titer: dtex1100 in Kett- und Schussrichtung
   o Gamdrehung: T0 in Kettrichtung und Z60 in Schussrichtung
   o Anzahl der Filamente im Garn: ca. 200 bis 250
   o Fadeneinstellung: 2,9 Fäden in Kett- und Schussrichtung
Gewebeausrüstung: Polyvinylchlorid und Additive
Flächengewicht der Gewebelage: ca. 108g/m² (± 10%)

### Beschichtung:

Material Polyvinylchlorid und Additive

### Kleber:

Kein Kleber/Fensterhaftung durch Verschmelzung der beidseitig aufgetragenen Schichten

### Deckschicht:

100 phr SPVC
60 phr Weichmacher
11 phr Stabilisator/handelsüblich für PVC Weichrezepturen
49 phr Füllstoff (Kreide)
1,7 phr handelsübliches Verarbeitungshilfsmittel für Weichpvc Rezepturen
0,3 phr Gleitmittel
16 phr Flammschutzmittel
+ diverse Farbbatche zur Einfärbung
+ Lackschicht/Acryllack 20 g/m² - beidseitig
Beschichtungsverfahren: Streichbeschichtung und Kalanderbeschichtung
Gewicht der Beschichtung: Gesamtauflage ca. 445 g/m²

### Mikrokanäle:

- Anzahl pro cm²: ca. 30
- Abstand untereinander: 600µm bis 1300µm stochastisch verteilt
- Größe: 100µm bis 150µm
- Form: konisch

Die Dicke des textilen Flächengebildes aufgebaut gemäß Probe 4 betrug 0,45 bis 0,50 mm, das Flächengewicht des textilen Flächengebildes vor der Einbringung der Mikrokanäle betrug 550g/m² (± 5%).

Die Messung der Proben 1 bis 4 erfolgte in einem Impedanzrohr (auch KUNDTsches Rohr genannt) nach DIN EN ISO 10534 -2 "Akustik-Bestimmung des Schallabsorptionsgrades α₀ und der Impedanz in Impedanzrohren". Der Aufbau erfolgte so, dass jede Probe einmal mit einem Wandabstand und einmal mit einem rückseitig reflexionsarmen Abschluss geprüft wurde. Der Rohrquerschnitt betrug für die Messung mit Wandabstand 200x200mm und für die Messung mit rückseitigem reflexionsarmen Abschluss 250x250 mm. Der rückseitige reflexionsarme Abschluss bestand aus einem hochabsorbierenden Keil mit 1,2 m Länge, wobei ein rückseitiger Wandabstand hinter diesem Keil die Absorption bei tiefen Frequenzen zusätzlich erhöhte. Bei der Verwendung des Rohres mit dem größeren Rohrquerschnitt wurde ein umlaufender Rahmen verwendet. Ein geringfügig systematischer Unterschied zum vollflächigen Probeneinsatz kann hier vernachlässigt werden, da der Vergleich der Proben untereinander im Vordergrund stand.

Die untere Grenzfrequenz der Messungen resultierte aus der Restabsorption des Messsystems bei tiefen Frequenzen. Die obere Grenzfrequenz ergab sich aus der Forderung nach einer ebenen Schallwelle und hing vom Querschnitt des Impedanzrohres und der Position des Messmikrofons ab.

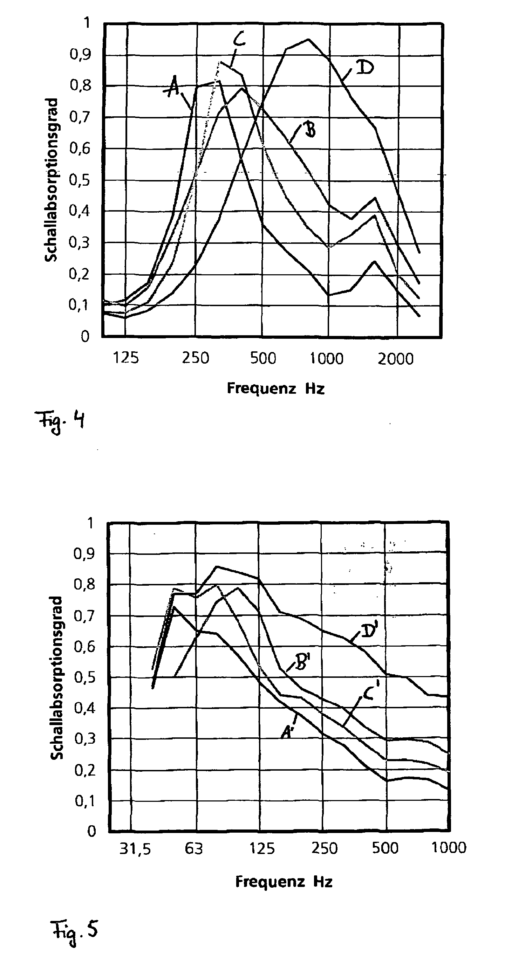

Die Messergebnisse sind in den Tabellen 1 und 2 sowie in den Figuren 4 und 5 dargestellt. Die Ergebnisse stellen den Schallabsorptionsgrad α₀ in Abhängigkeit des auswertbaren Frequenzbereichs dar.

Die Figur 4 stellt schematisch die Messergebnisse der Proben mit rückseitigem Wandabstand dar. Die Kurve A repräsentiert dabei die Probe 1, die Kurve B repräsentiert die Probe 2, die Kurve C die Probe 3 und die Kurve D die Probe 4. Die Kurven A, B, C und D weisen alle auf ein akustisches Resonanzsystem hin. Demnach sind die jeweiligen Spitzenwerte den jeweiligen Resonanzfrequenzen zuzuordnen.

Bei der Probe 1 handelt es sich überwiegend um ein Masse-Feder-System (Membranmasse, Luftfeder infolge des Wandabstandes). Bei Probe 4 liegt eine Art Mikroperforation in Form von Mikrokanälen vor, bei dem die "Luftpropfen3 in den Mikrokanälen vor dem dahinterliegenden Luftkissen schwingen und bei dieser Schwingung auf Reibung treffen. Dieser Reibungsverlust bewirkt die vorteilhafte Breitbandigkeit der Absorption der Probe 4. Bei den Proben 2 und 3 ist ohne nähere Untersuchung von einer Überlagerung beider Resonanzeffekte auszugehen, die von der akustisch tatsächlich wirksamen Perforation (Mikrokanäle) abhängt.

In der Figur 5 ist schematisch der gemessene Schallabsorptionsgrad der Proben 1 bis 4 mit rückseitigem reflexionsarmen Abschluss bei senkrechtem Schalleinfall in Abhängigkeit von der Frequenz dargestellt. Mit rückseitigem reflexionsarmen Abschluss, der ein akustisches Freifeld (zum Beispiel einen großen Raum) hinter der Membran simulieren soll, wird die gemessene Schallabsorption der Probe 1 (Kurve A') von der Schalldämmung der Membranen bestimmt. Das heißt je niedriger die Schalldämmung, desto mehr Schallenergie tritt durch die Membran hindurch und wird auf der Vorderseite als "Schallabsorption" wahrgenommen. Angesichts der massebedingten bei tiefen Frequenzen niedrigen Schalldämmungen, die mit der Frequenz zunimmt, weist die Schallabsorption ein dazu entgegen gesetztes Verhalten auf. Bei tiefen Frequenzen ergibt sich eine hohe Absorption, die mit steigender Frequenz abnimmt. Bei der Probe 4 (Kurve D' in Figur 5) steigert sich die "echte" Schallabsorption infolge der Mikrokanäle erheblich. Bei den Proben 1 und 3 (Kurven B' und C' in der Figur 5) ist wiederum eine Kombination der Effekte zu beobachten.

Zusammenfassend lässt sich feststellen, dass das Schallabsorptionsvermögen der Proben maßgeblich von deren Masse und den einbaubedigten Randbedingungen abhängt. Die sehr hohe und breitbandige Absorption der Probe 4 ist auf besonders hohe poröse Reibung und Resonanzschwingungen zurückzuführen.

Die Tabelle 1 stellt die Messungen mit einem 50mm Wandabstand für die Proben 1 bis 4 dar.

**Tabelle 1**

| f in Hz | α₀ | α₀ | α₀ | α₀ |
|---|---|---|---|---|
| | Probe 1 | Probe 2 | Probe 3 | Probe 4 |
| 100 | 0,102 | 0,116 | 0,079 | 0,076 |
| 125 | 0,118 | 0,098 | 0,076 | 0,061 |
| 160 | 0,172 | 0,159 | 0,111 | 0,086 |
| 200 | 0,385 | 0,327 | 0,234 | 0,138 |
| 250 | 0,798 | 0,519 | 0,512 | 0,226 |
| 315 | 0,818 | 0,716 | 0,880 | 0,372 |
| 400 | 0,569 | 0,791 | 0,837 | 0,571 |
| 500 | 0,359 | 0,726 | 0,609 | 0,755 |
| 630 | 0,279 | 0,634 | 0,447 | 0,919 |
| 800 | 0,214 | 0,534 | 0,351 | 0,950 |
| 1000 | 0,135 | 0,423 | 0,287 | 0,882 |
| 1250 | 0,150 | 0,380 | 0,329 | 0,759 |
| 1600 | 0,242 | 0,446 | 0,389 | 0,665 |
| 2000 | 0,148 | 0,294 | 0,203 | 0,457 |
| 2500 | 0,068 | 0,172 | 0,127 | 0,272 |

Die Tabelle 2 stellt die Messergebnisse für die Proben 1 bis 4 bei einem Versuchsaufbau mit einem rückseitigen reflexionsarmen Abschluss dar.

**Tabelle 2**

| f in Hz | α₀ | α₀ | α₀ | α₀ |
|---|---|---|---|---|
| | Probe 1 | Probe 2 | Probe 3 | Probe 4 |
| 40 | 0,466 | 0,5 | 0,53 | 0,474 |
| 50 | 0,728 | 0,501 | 0,789 | 0,769 |
| 63 | 0,65 | 0,628 | 0,758 | 0,769 |
| 80 | 0,642 | 0,742 | 0,801 | 0,86 |
| 100 | 0,572 | 0,787 | 0,68 | 0,839 |
| 125 | 0,483 | 0,711 | 0,536 | 0,818 |
| 160 | 0,421 | 0,528 | 0,441 | 0,712 |
| 200 | 0,376 | 0,461 | 0,434 | 0,688 |
| 250 | 0,316 | 0,428 | 0,383 | 0,65 |
| 315 | 0,28 | 0,402 | 0,34 | 0,628 |
| 400 | 0,211 | 0,336 | 0,279 | 0,583 |
| 500 | 0,165 | 0,296 | 0,231 | 0,51 |
| 630 | 0,173 | 0,297 | 0,232 | 0,498 |
| 800 | 0,166 | 0,287 | 0,218 | 0,438 |
| 1000 | 0,136 | 0,251 | 0,193 | 0,435 |

### Bezugszeichenliste

- 1: textiles Flächengebilde
- 2: erste Beschichtungslage
- 2': zweite Beschichtungslage
- 3: Gewebelage
- 4: Mikrokanal / Mikrokanäle
- 5: Durchlass
- 6: Abschnitt (geordnete Anordnung der Mikrokanäle)
- 7: Abschnitt (ungeordnete Anordnung der Mikrokanäle)
- 8: Kettfaden
- 9: Schussfaden
- A: Kurve Probe 1
- A': Kurve Probe 1
- B: Kurve Probe 2
- B': Kurve Probe 2
- C: Kurve Probe 3
- C': Kurve Probe 3'
- D: Kurve Probe 4
- D': Kurve Probe 4'

## Patentansprüche

1. Textiles Flächengebilde (1), wobei das textile Flächengebilde (1) mindestens eine Gewebelage (3) aus Fasermaterial aufweist, wobei eine erste Oberfläche der Gewebelage (3) vollflächig eine erste Beschichtungslage (2) aus einem Beschichtungsmaterial aufweist und eine zweite Oberfläche der Gewebelage (3) vollflächig eine zweite Beschichtungslage (2) aus dem Beschichtungsmaterial aufweist, wobei das textile Flächengebilde (1) Mikrokanäle (4) aufweist, wobei die Gewebelage (3) zur Bildung der Mikrokanäle (4) durchdrungen ist, so dass zumindest in einem Teil der Mikrokanäle (4) Filamente der Gewebelage (3) in die Mikrokanäle (4) hineinreichen und die Mikrokanäle (4) durch die Beschichtungslage (2) und durch die Gewebelage (3) verlaufen und zumindest ein Teil der Mikrokanäle (4) in ihrer seitlichen Begrenzung Beschichtungsmaterial und Fasermaterial aufweisen.

2. Textiles Flächengebilde (1) nach Anspruch 1, **dadurch gekennzeichnet, dass** die mindestens eine Gewebelage (3) auf der ersten und/oder der zweiten Oberfläche vollflächig eine dritte Beschichtungslage (2') aus einem weiteren Beschichtungsmaterial aufweist.

3. Textiles Flächengebilde (1) nach mindestens einem der vorhergehenden Ansprüche, **dadurch gekennzeichnet, dass** die Gewebelage (3) eine Leinwandbindung, eine Fadenzahl von 1,0 bis 42 Fd/cm in Kett- und/oder Schussrichtung und/oder ein Flächengewicht von 300 bis 3000g/m² aufweist,.

4. Textiles Flächengebilde (1) nach mindestens einem der vorhergehenden Ansprüche, **dadurch gekennzeichnet, dass** die Gewebelage (3) Garne mit einem Titer von 167 bis 3300 dtex aufweist.

5. Textiles Flächengebilde (1) nach mindestens einem der vorhergehenden Ansprüche, **dadurch gekennzeichnet, dass** die Gewebelage (3) aus Filamentgarn aufgebaut ist.

6. Textiles Flächengebilde (1) nach mindestens einem der vorhergehenden Ansprüche, **dadurch gekennzeichnet, dass** die Beschichtungslage (2) und die zweite Beschichtungslage (2') Polyvinylchlorid, Polyolefine, metallocene Plastomere, Polyurethan, Alcryl, Silikon, Acrylat und/oder Mischungen dieser Stoffe aufweist.

7. Textiles Flächengebilde (1) nach mindestens einem der vorhergehenden Ansprüche, **dadurch gekennzeichnet, dass** die Mikrokanäle (4) in einer Beschichtungslagenoberfläche einen Durchmesser von 100 bis 400µm haben.

8. Textiles Flächengebilde (1) nach mindestens einem der vorhergehenden Ansprüche, **dadurch gekennzeichnet, dass** die Anzahl der Mikrokanäle (4) pro cm² im textilen Flächengebilde (1) 4 bis 150 beträgt.

9. Textiles Flächengebilde (1) nach mindestens einem der vorhergehenden Ansprüche, **dadurch gekennzeichnet, dass** das Verhältnis der Summe der Kanaleintrittsflächen in der ersten Beschichtungslage (2) zur Gesamtfläche der ersten Beschichtungslage (2) 0,03 bis 30% beträgt.

10. Verfahren zur Herstellung eines textilen Flächengebildes (1) gemäß mindestens einen der Ansprüche 1 bis 9, wobei die Oberflächen einer Gewebelage (3) beidseitig durch ein vollflächig auf die Oberflächen der Gewebelage (3) aufgebrachtes Beschichtungsmaterial in einem ersten Beschichtungsvorgang beschichtet werden, so dass auf zwei Oberflächen der Gewebelage (3) eine Beschichtungslage (2) gebildet wird, wobei nach dem Beschichtungsvorgang in einem Lochvorgang die Beschichtungslagen (2, 2') und die Gewebelage (3) zur Bildung von Mikrokanälen (4) durchdrungen werden, wobei die Gewebelage (3) zur Bildung der Mikrokanäle (4) so durchdrungen wird, dass zumindest in einem Teil der Mikrokanäle (4) Filamente der Gewebelage (3) in die Mikrokanäle (4) hineinreichen.

11. Verwendung eines textilen Flächengebildes (1) gemäß mindestens einem der Ansprüche 1 bis 9 zur Schallabsorption.

## Claims

1. Textile fabric (1), wherein the textile fabric (1) has at least one fabric layer (3) made of fiber material, wherein a first surface of the fabric layer (3) has a first coating layer (2) made of a coating material across the full surface of the fabric layer and a second surface of the fabric layer (3) has a second coating layer (2) made of the coating material across the full surface of the fabric layer, wherein the textile fabric (1) has microchannels (4), wherein the fabric layer (3) is permeated to form the microchannels (4) such that at least in a part of the microchannels (4) filaments of the fabric layer (3) reach into the microchannels (4) and the microchannels (4) run through the coating layer (2) and through the fabric layer (3), and at least a part of the microchannels (4) have coating material and fiber material in their lateral delimiting.

2. Textile fabric (1) according to Claim 1, **characterized in that** the at least one fabric layer (3) has a third coating layer (2') made of a further coating material on the first and/or the second surface across the full surface of the fabric layer.

3. Textile fabric (1) according to at least one of the preceding claims, **characterized in that** the fabric layer (3) has a plain weave, a thread count of 1.0 to 42 threads/cm in warp and/or weft direction, and/or a mass per unit area of 300 to 3000 g/m².

4. Textile fabric (1) according to at least one of the preceding claims, **characterized in that** the fabric layer (3) has yarns with a linear density of 167 to 3300 dtex.

5. Textile fabric (1) according to at least one of the preceding claims, **characterized in that** the fabric layer (3) is constructed of filament yarn.

6. Textile fabric (1) according to at least one of the preceding claims, **characterized in that** the coating layer (2) and the second coating layer (2') have polyvinyl chloride, polyolefins, metallocene plastomers, polyurethane, alcryn, silicone, acrylate, and/or mixtures of these materials.

7. Textile fabric (1) according to at least one of the preceding claims, **characterized in that** the microchannels (4) in a coating layer surface have a diameter of 100 to 400 µm.

8. Textile fabric (1) according to at least one of the preceding claims, **characterized in that** the number of microchannels (4) per cm² in the textile fabric (1) is 4 to 150.

9. Textile fabric (1) according to at least one of the preceding claims, **characterized in that** the proportion of the sum of the channel inlet surfaces in the first coating layer (2) to the total surface of the first coating layer (2) is 0.03 to 30%.

10. Method for producing a textile fabric (1) according to at least one of Claims 1 to 9, wherein the surfaces of a fabric layer (3) are coated on both sides in a first coating process by a coating material applied to the surfaces of the fabric layer (3) across the full surface of the fabric layer such that a coating layer (2) is formed on two surfaces of the fabric layer (3), wherein subsequent to the coating process the coating layers (2, 2') and the fabric layer (3) are permeated in a piercing process to form the microchannels (4), wherein the fabric layer (3) is permeated to form the microchannels (4) such that at least in a part of the microchannels (4) filaments of the fabric layer (3) reach into the microchannels (4).

11. Use of a textile fabric (1) according to at least one of Claims 1 to 9 for acoustic absorption.

## Revendications

1. Structure textile plate (1), ladite structure textile plate (1) présentant au moins une couche tissée (3) en matériau du type fibre, une première surface de la couche tissée (3) présentant sur l'ensemble de la surface une première couche d'enduction (2), constituée d'un matériau d'enduction, et une deuxième surface de la couche tissée (3) présentant sur l'ensemble de la surface une deuxième couche d'enduction (2) constituée du matériau d'enduction, la structure textile plate (1) présentant des micro-canaux (4), la couche tissée (3) étant perforée en vue de la formation des micro-canaux (4), de telle manière qu'au moins dans une partie des micro-canaux (4) des filaments de la couche tissée (3) pénètrent dans les micro-canaux (4) et que les micro-canaux (4) s'étendent à travers la couche d'enduction (2) et la couche tissée (3) et qu'au moins une partie des micro-canaux (4) présente du matériau d'enduction et du matériau du type fibre dans sa limite latérale.

2. Structure textile plate (1) selon la revendication 1 **caractérisée en ce que** la couche tissée au moins unique (3) présente sur sa première face et/ou sur sa deuxième face une couche d'enduction (2') s'étendant sur toute la surface, constituée d'un autre matériau d'enduction.

3. Structure textile plate (1) selon au moins une des revendications qui précèdent, **caractérisée en ce que** la couche tissée (3) présente une armure uni, un nombre de fils compris entre 1,0 et 42 Fd/cm dans le sens de la chaîne et/ou dans le sens de la trame et/ou une masse surfacique comprise entre 300 et 3000 g/m².

4. Structure textile plate (1) selon au moins une des revendications qui précèdent, **caractérisée en ce que** la couche tissée (3) présente des fils dotés d'un titre compris entre 167 et 3300 dtex.

5. Structure textile plate (1) selon au moins une des revendications qui précèdent, **caractérisée en ce que** la couche tissée (3) est constituée de fils du type filament.

6. Structure textile plate (1) selon au moins une des revendications qui précèdent, **caractérisée en ce que** la couche d'enduction (2) et la deuxième couche d'enduction (2) présentent du polychlorure de vinyle, des polyoléfines, des plastomères du type ocène métallique, du polyuréthane, un alcryn, un silicone, un acrylate et/ou des mélanges de ces matières.

7. Structure textile plate (1) selon au moins une des revendications qui précèdent, **caractérisée en ce que** les micro-canaux (4) présents dans une surface de couche d'enduction ont un diamètre compris entre 100 et 400 micromètres.

8. Structure textile plate (1) selon au moins une des revendications qui précèdent, **caractérisée en ce que** le nombre de micro-canaux (4) présents dans la structure textile plate (1) est compris entre 4 et 150 par cm².

9. Structure textile plate (1) selon au moins une des revendications qui précèdent, **caractérisée en ce que** le rapport de la somme des surfaces d'entrée des canaux dans la première couche d'enduction (2) à la surface totale de la première couche d'enduction (2) est compris entre 0,003 et 30 %.

10. Procédé de fabrication d'une structure textile plate (1) selon au moins une des revendications 1 à 9, les surfaces d'une couche tissée (3) étant, dans un premier processus d'enduction, enduites des deux côtés d'un matériau d'enduction appliqué sur la totalité des surfaces de la couche tissée (3), de telle manière qu'une couche d'enduction (2) se trouve réalisée sur les deux faces de la couche tissée (3), les couches d'enduction (2, 2') et la couche tissée (3) étant perforées lors d'un processus de formation de trous en vue de former des micro-canaux (4), la couche tissée (3) étant perforée en vue de la formation de micro-canaux (4) de telle manière que des filaments de la couche tissée (3) pénètrent dans les micro-canaux (4) au moins dans une partie des micro-canaux (4).

11. Utilisation d'une structure textile plate (1) selon au moins une des revendications 1 à 9 en vue de l'absorption du son.
